# EUROPEAN PATENT APPLICATION

(11) **EP 3 865 209 A1**
(43) Date of publication of application: **18.08.2021**
(21) Application number: 20157571.9
(22) Date of filing: 17.02.2020
(51) Int. Cl.: B01J 23/44, B01J 35/00, B01J 35/04, B01J 37/02, B01J 37/03

(54) **DIESEL OXIDATION CATALYST**

(71) Applicant: UMICORE AG & Co. KG, 63457 Hanau-Wolfgang (DE)
(72) Inventor: MUELLER, Elena, 64319 Pfungstadt (DE); HAUPTMANN, Wulf, 63751 Gelnhausen (DE)

(57) **Abstract**

The present invention relates to a diesel oxidation catalyst comprising a carrier body having a length L extending between a first end face and a second end face, and differently composed material zones A and B arranged on the carrier body, wherein
- material zone A comprises platinum, palladium, rhodium or a mixture of any two or more thereof applied to a cerium-zirconium mixed oxide, and
- material zone B comprises platinum, palladium or platinum and palladium applied to a carrier oxide B.

## Description

The present invention relates to an oxidation catalyst for purifying the exhaust gases of diesel engines.

In addition to carbon monoxide CO, hydrocarbons HC and nitrogen oxides NOₓ, the raw exhaust of diesel engines contains a relatively high oxygen content of up to 15% by volume. Additionally, particulate emissions are included which predominantly consist of soot residues and in some cases organic agglomerates and result from a partially incomplete combustion of fuel in the cylinder.

While diesel particulate filters with and without catalytically active coating are suitable for removing the particulate emissions, and nitrogen oxides can be converted to nitrogen, for example, by selective catalytic reduction (SCR) in a so-called SCR catalyst, carbon monoxide and hydrocarbons are rendered harmless by oxidation in a suitable oxidation catalyst.

Oxidation catalysts are extensively described in the literature. These are, for example, so-called flow-through substrates made of ceramic or metal material, which carry as essential catalytically active constituent noble metals, such as platinum and palladium, on high-surface-area, porous, high-melting-point oxides, for example, aluminum oxide. Already zoned oxidation catalysts are also described which have, in the direction of flow of the exhaust gas, material zones of different composition, with which the exhaust gas comes into contact in succession.

For example, US2010/257843, US2011/099975, and WO2012/079598 A1 describe zoned oxidation catalysts which contain platinum and palladium. WO2011/057649 A1 also describes oxidation catalysts, wherein they can be used in layered and zoned embodiments. In the case of the zoned embodiments, the second zone, i.e. the zone with which the outflowing exhaust gas is in direct contact, has a higher noble metal content than the front zone, which is in direct contact with the incoming exhaust gas. The oxidation catalysts according to WO2011/057649 have the particular task of setting an optimum ratio of NO to NO₂ for an SCR catalyst on the outflow side. Further oxidation catalysts are disclosed in WO2010/133309 A1, WO2013/050784 A2, US2008/045405, WO2012/137930 A1 and WO2012/071421 A2.

EP2000639A1 describes oxidation catalysts which contain, in addition to platinum, an oxide of a metal selected from magnesium, alkaline earth metal and alkali metal. The function of the catalyst is to increase the exhaust gas temperature during fuel injection. WO2010/083355A2 discloses diesel oxidation catalysts which comprise a first washcoat layer which comprises palladium and a first refractory metal oxide support including cerium and a second washcoat layer comprising a second refractory oxide support and a platinum component. The second washcoat layer is substantially free of palladium and comprises a molecular sieve.
WO2013/042080A1 discloses a layered diesel oxidation catalyst which comprises in a first layer palladium impregnated on a support material comprising ceria in an amount of at least 45 weight-%.
WO2015/031611A1 discloses a CO slip catalyst which comprises palladium and a ceria-containing material, which for example can be ceria, ceria-zirconia, ceria-zirconia-alumina or mixtures thereof.

The exhaust gas temperatures of current and future diesel engines of Exhaust Legislation Euro 5, 6 and 6+ are getting increasingly lower due to fuel savings for lowering the CO₂ output. It is all the more important to have diesel oxidation catalysts which have a sufficient CO light off at low exhaust gas temperatures. The diesel oxidation catalysts known to date do not fulfill this condition sufficiently, so that there is a need for a corresponding further development.

It has now been found that the diesel oxidation catalysts described and defined below meet these conditions.

The present invention relates to a diesel oxidation catalyst comprising a carrier body having a length L extending between a first end face and a second end face, and differently composed material zones A and B arranged on the carrier body, wherein
- material zone A comprises platinum, palladium, rhodium or a mixture of any two or more thereof applied to a cerium-zirconium mixed oxide, and
- material zone B comprises platinum, palladium or platinum and palladium applied to a carrier oxide B.

Material zone A preferably comprises palladium, platinum and palladium, platinum and rhodium or platinum, palladium and rhodium. More preferably, material zone A comprises platinum and palladium in a weight ratio of 3:1 to 1:50, for example 2:1 to 1:20 or 1:1 to 1:10.
Material zone A preferably comprises platinum, palladium, rhodium or a mixture of any two or more thereof in an amount of 0.18 to 3.53 g/L based on the volume of the carrier body.

In material zone A platinum, palladium, rhodium or a mixture of any two or more thereof are applied to a cerium-zirconium mixed oxide. In the context of the present application the term "cerium-zirconium mixed oxide" excludes physical mixtures of cerium oxide and zirconium oxide. Rather, the term stands for a solid solution with a uniform crystal lattice in which the individual metal oxides cannot be distinguished. Or it stands for agglomerates comprising cerium oxide and zirconium oxide which do not have a uniform crystal lattice and in which phases of the individual metal oxides can be distinguished.
Preferably, the cerium-zirconium mixed oxide comprises 40 to 90% by weight of cerium oxide and 60 to 10% by weight of zirconium oxide.
Usually, material zone A comprises cerium-zirconium mixed oxide in an amount of 20 to 140 g/L based on the volume of the carrier body.
Preferably, material zone A is free of barium and barium oxide.

Material zone B preferably comprises platinum and palladium. More preferably, material zone B comprises platinum and palladium in a weight ratio of 10:1 to 1:3, for example 5:1 to 1:1.
Material zone B preferably comprises platinum and palladium in an amount of 0.73 to 6.36 g/L based on the volume of the carrier body.

Carrier oxide B is advantageously high-melting, i.e. its melting point is at a sufficient distance above the temperatures occurring during the intended operation of the oxidation catalyst according to the invention. Carrier oxide B is also advantageously of high surface area and preferably has specific surfaces of 50 to 200 m²/g.

Carrier oxide B is in particular selected from the group consisting of aluminum oxide, doped aluminum oxide, silicon oxide, titanium dioxide, zirconium oxide and mixed oxides of one or more thereof.
Doped aluminum oxides are, for example, aluminum oxides doped with silicon oxide, zirconium oxide and/or titanium oxide. Lanthanum-doped aluminum oxide is advantageously used, wherein lanthanum is used in amounts of from 1 to 10% by weight, preferably from 3 to 6% by weight, each calculated as La₂O₃ and relative to the weight of the stabilized aluminum oxide.
Preferably, carrier oxide B is aluminum oxide or lanthanum-stabilized aluminum oxide. Usually, material zone B comprises carrier oxide B in an amount of 10 to 160 g/L based on the volume of the carrier body.

In an embodiment of the oxidation catalyst according to the present invention, material zone B comprises lanthanum oxide, magnesium oxide, barium oxide and/or strontium oxide, in particular in an amount of 0.5 to 8 g/L based on the volume of the carrier body. Lanthanum oxide is preferred.

In another embodiment of the oxidation catalyst according to the present invention, material zone B comprises a hydrocarbon adsorbent material which is for example a zeolite. Preferably, the hydrocarbon adsorbent material is a beta zeolite.

In still another embodiment of the oxidation catalyst according to the present invention, the carrier body comprises a material zone C, which is different from material zones A and B and which comprises platinum, palladium or platinum and palladium applied to a carrier oxide C.

Preferably, material zone C comprises platinum or platinum and palladium in a weight ratio ≥ 1, for example 20:1 to 10:1.
Material zone C preferably comprises platinum, palladium or platinum and palladium in an amount of 1.06 to 7.06 g/L based on the volume of the carrier body.

Carrier oxide C is advantageously high-melting, i.e. its melting point is at a sufficient distance above the temperatures occurring during the intended operation of the oxidation catalyst according to the invention. Carrier oxide C is also advantageously of high surface area and preferably has specific surfaces of 50 to 200 m²/g.
Carrier oxide C is in particular selected from the group consisting of aluminum oxide, doped aluminum oxide, silicon oxide, zirconium oxide, titanium dioxide and mixed oxides of one or more thereof.
Doped aluminum oxides are, for example, aluminum oxides doped with silicon oxide, zirconium oxide and/or titanium oxide. Lanthanum-stabilized aluminum oxide is advantageously used, wherein lanthanum is used in amounts of from 1 to 10% by weight, preferably from 3 to 6% by weight, each calculated as La₂O₃ and relative to the weight of the stabilized aluminum oxide.
Preferably, carrier oxide C is aluminum oxide doped with silica in a total amount of 1 to 20% by weight based on the weight of the carrier oxide C.
Usually, material zone C comprises carrier oxide C in an amount of 30 to 180 g/L based on the volume of the carrier body.

In a particularly preferred embodiment, the present invention relates to a diesel oxidation catalyst comprising a carrier body having a length L extending between a first end face and a second end face, and
differently composed material zones A, B and C arranged on the carrier body, wherein
- material zone A comprises platinum and palladium in a weight ratio of 1:1 to 1:10 applied to a cerium-zirconium mixed oxide comprising 40 to 90% by weight of cerium oxide and 60 to 10% by weight of zirconium oxide,
- material zone B comprises platinum and palladium in a weight ratio of 5:1 to 1:1 applied to aluminum oxide or lanthanum-stabilized aluminum oxide, and
- material zone C comprising platinum and/or palladium applied to aluminum oxide doped with 1 to 20% by weight of silica based on the doped aluminum oxide.

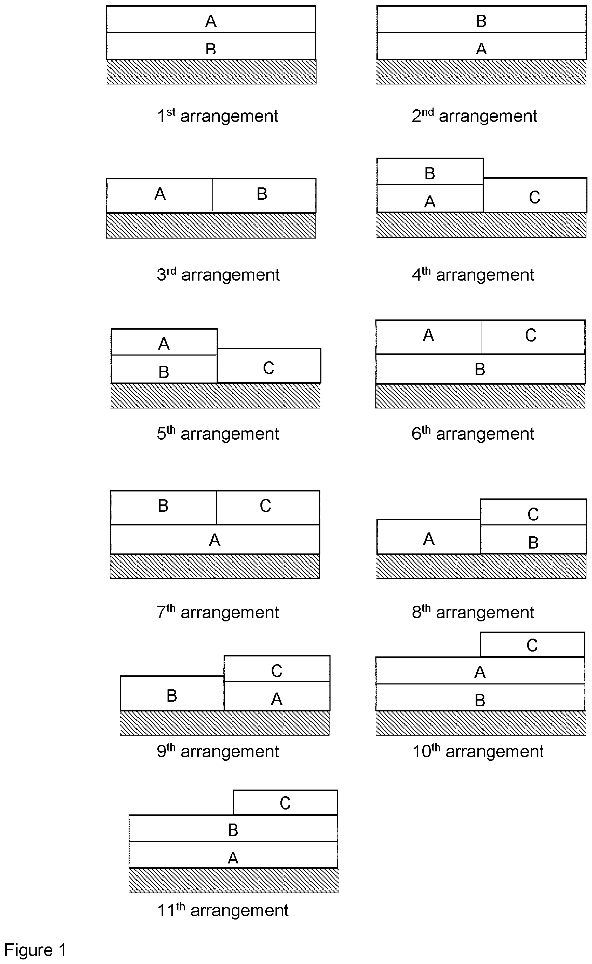

Carrier bodies are particularly so-called honeycomb bodies made of ceramic, preferably cordierite, or of metal. So-called flow-through honeycomb bodies are preferably used. However, embodiments are also conceivable in which wall-flow filters are used as carrier bodies. Preferably, the carrier body is not heatable
Material zones A and B and if present material zone C can be arranged on the carrier body in different arrangements, see Figure 1.

In a first arrangement, the oxidation catalyst of the present invention comprises material zones A and B which both extend over the complete length L of the carrier body, wherein material zone B is located below material zone A.

In a second arrangement, the oxidation catalyst of the present invention comprises material zones A and B which both extend over the complete length L of the carrier body, wherein material zone A is located below material zone B.

In a third arrangement, the oxidation catalyst of the present invention comprises material zones A and B, wherein material zone A extends starting from the first end face over 20 to 80 % of the length L and material zone B extends starting from the second end face over 20 to 80 % of the length L. In preferred embodiment of the third arrangement material zones A and B both extend over 40 to 60%, more preferred 50% of the length L.

In a forth arrangement, the oxidation catalyst of the present invention comprises material zones A, B and C, wherein material zones A and B both extend starting from the first end face over 40 to 60 % of the length L wherein material zone A is located below material zone B and material zone C extends from the second end face over 40 to 60 % of the length L, wherein L = L_{A} + L_{C}, wherein L_{A} is the length of material zone A, Lc is the length of the material zone C and material zone B has the same length as material zone A.

In a fifth arrangement, the oxidation catalyst of the present invention comprises material zones A, B and C, wherein material zones A and B both extend starting from the first end face over 40 to 60 % of the length L wherein material zone B is located below material zone A and material zone C extends from the second end face over 40 to 60 % of the length L, wherein L = L_{A} + Lc, wherein L_{A} is the length of material zone A, Lc is the length of the material zone C and material zone B has the same length as material zone A.

In a sixth arrangement, the oxidation catalyst of the present invention comprises material zones A, B and C, wherein material zones A extends starting from the first end face over 40 to 60 % of the length L, material zone C extends starting from the second end face over 40 to 60 % of the length L and material zone B extends over the complete length L and is located below material zones A and C and wherein L = L_{A} + Lc, wherein L_{A} is the length of material zone A, Lc is the length of the material zone C.

In a seventh arrangement, the oxidation catalyst of the present invention comprises material zones A, B and C, wherein material zones B extends starting from the first end face over 40 to 60 % of the length L, material zone C extends starting from the second end face over 40 to 60 % of the length L and material zone A extends over the complete length L and is located below material zones B and C and wherein L = L_{B} + L_{C}, wherein L_{B} is the length of material zone B, L_{C} is the length of the material zone C.

In an eighth arrangement, the oxidation catalyst of the present invention comprises material zones A, B and C, wherein material zones B and C both extend starting from the second end face over 40 to 60 % of the length L wherein material zone B is located below material zone C and material zone A extends starting from the first end face over 40 to 60 % of the length L, wherein L = L_{A} + L_{C}, wherein L_{A} is the length of material zone A, Lc is the length of the material zone C and material zone B has the same length as material zone C.

In a ninth arrangement, the oxidation catalyst of the present invention comprises material zones A, B and C, wherein material zones A and C both extend starting from the second end face over 40 to 60 % of the length L wherein material zone A is located below material zone C and material zone B extends starting from the first end face over 40 to 60 % of the length L, wherein L = L_{B} + Lc, wherein L_{B} is the length of material zone B, Lc is the length of the material zone C and material zone A has the same length as material zone C.

In a tenth arrangement, the oxidation catalyst of the present invention according to the 1^{st} arrangement additionally comprises material zone C which extends starting from the second end face over 40 to 60 % of the length L.

In an eleventh arrangement, the oxidation catalyst of the present invention according to the 2^{nd} arrangement additionally comprises material zone C which extends starting from the second end face over 40 to 60 % of the length L.

Oxidation catalysts according to the invention can be produced by coating suitable carrier bodies in a manner known per se by means of coating suspensions, so-called washcoats. To produce a coating suspension for producing the material zones A, B and C, respectively, the selected carrier oxides are suspended in water. Platinum and/or palladium and/or rhodium are then added while stirring to the suspension in the form of suitable, water-soluble precursor compounds, such as palladium nitrate or hexahydroxoplatinic acid, for example, and optionally fixed on the carrier material by setting the pH and/or by adding an auxiliary reagent.
Alternatively, the noble metal may also be applied to the carrier material in a manner analogous to the method described in EP 1,101,528 A2.
The suspensions obtained in this way are then ground and applied to the carrier body by one of the standard coating methods. After each coating step, the coated part is dried in a hot air stream and in some cases calcined.
The aforementioned precursors and auxiliary reagents are well known to those skilled in the art.

The diesel oxidation catalysts according to the invention are suitable for purifying the exhaust gases of diesel engines, in particular with regard to carbon monoxide and hydrocarbons.
The present invention thus also relates to a method for the treatment of diesel exhaust gases, which is characterized in that the diesel exhaust gas is conducted through a diesel oxidation catalyst as described and defined above, wherein the diesel exhaust gas flows into the carrier body at the first end face and flows out of the carrier body at the second end face.

In particular, it was surprisingly discovered that the diesel oxidation catalyst according to the present invention when being below its operating temperature, which is typically below 200°C (usually known as cold start period), heats up very quickly to temperatures above its operating temperature when run at λ ≤ 1. When at or above its operating temperature it can be run at lean conditions at λ > 1, which means can be used as diesel oxidation catalyst.
Accordingly, the diesel oxidation catalyst according to the present invention can be used as cold start catalyst, which heats up quickly (usually within 180 to 220 seconds) to temperatures above its operating temperature ((200°C or more) and which thus avoids harmful substances to be released to atmosphere by shortening the cold start period.

Usually, the heating up of the inventive oxidation catalyst to a temperature of 200°C or more by operating it at an air-fuel ratio of λ ≤ 1 takes 180 to 220 seconds. In contrast, known oxidation catalysts according to prior art usually need more than 350 and up to more than 400 seconds to reach 200°C. Accordingly, the inventive oxidation catalyst allows the cold start period to be shortened by at least 130 seconds.

The present invention thus also relates to a method for operating a diesel oxidation catalyst as described and defined above which comprises
- operating it at an air-fuel ratio of λ ≤ 1 when its temperature is below 200°C and
- operating it at an air-fuel ratio of λ > 1 when its temperature is at or above 200°C.

The inventive method has the additional advantage that the cold start period can be shortened without using a carrier body, which comprises means to control its temperature, in particular means to heat it up.

The diesel oxidation catalysts according to the invention are used in particular as constituents of exhaust gas purification systems. In addition to a diesel oxidation catalyst according to the invention, corresponding exhaust gas purification systems include, for example, a diesel particulate filter and/or a catalyst for selective catalytic reduction of nitrogen oxides, wherein the diesel particulate filter and SCR catalyst are usually arranged downstream of the diesel oxidation catalyst according to the invention, that is on the outflow side. In one embodiment of the emission control system, the SCR catalyst is arranged on the diesel particulate filter.

### Example 1

a) 60 g/l of milled CeZrOx material (CeO₂/ZrO₂=80/20) were added to a solution of soluble Pt salt (0.35315 g/l Pt), followed by 1.05944 g/l of Pd ex nitrate. Finally, 4.5 g/L of Alumina-sol were added. The obtained product was dried and calcined for 2h at 550°C.
b) A commercially available round flow-through substrate of cordierite having the dimensions 14.4 cm x 7.6 cm (5.66" x 3.00") with cell density 62 cpcm (400 cpsi) and wall thickness 102 µm (4.0 mils) was coated over its complete length with a washcoat containing 66 g/l of the product obtained according to a) above.
c) To 66.165 g/l of a milled powder comprising 2.5897 g/l Pt, and 1.2949 g/l Pd fixed on 100 g/l of alumina, 3.18 g/l of La₂O₃ and 25.48 g/l of beta zeolite were added.The powder was calcined for 2h at 550°C.
d) The coated substrate obtained according to b) above was coated over its complete length with a washcoat containing 94 g/l of the product obtained according to c) above. The oxidation catalyst obtained corresponds to the second arrangement mentioned above and is called C1 below.

### Example 2

Example 1 was repeated with the exception that steps a) and c) were interchanged. The oxidation catalyst obtained corresponds to the first arrangement mentioned above and is called C2 below.

### Comparison Example 1

a) To 103.88 g/l of a milled powder comprising 2.5897 g/l Pt, and 1.2949 g/l of Pd fixed on 100 g/l of alumina, 5 g/l of La₂O₃ and 40 g/l of beta zeolite were added. The powder was calcined for 2h at 550°C.
b) A commercially available round flow-through substrate of cordierite having the dimensions 14.4 cm x 7.6 cm (5.66" x 3.00") with cell density 62 cpcm (400 cpsi) and wall thickness 102 µm (4.0 mils) was coated over its complete length with a washcoat containing 148 g/l of the product obtained according to a) above.
   The oxidation catalyst obtained is called CC1 below.

### Comparison Example 2

a) To 103.88 g/l of a milled powder comprising 0.97 g/l Pt, and 2.91 g//l of Pd fixed on a CeZrOx material (CeO₂/ZrO₂=80/20) and 5 g/l of La₂O₃ were added. The powder was calcined for 2h at 550°C.
b) A commercially available round flow-through substrate of cordierite having the dimensions 14.4 cm x 7.6 cm (5.66" x 3.00") with cell density 62 cpcm (400 cpsi) and wall thickness 102 µm (4.0 mils) was coated over its complete length with a washcoat containing 109 g/l of the product obtained according to a) above.
   The oxidation catalyst obtained is called CC2 below.

### Example 3

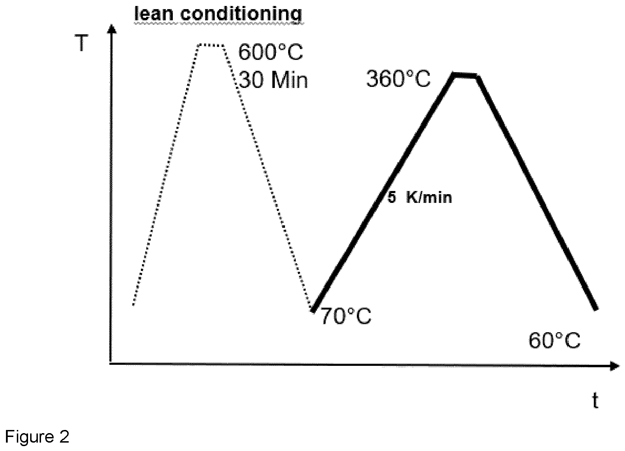

Comparative experiments to determine T₅₀CO- and T₅₀C₃H₆-light off values
a) Cores were taken out of catalysts C1, C2 and CC1 and CC2. All cores were aged 16 h at 800°C under hydrothermal atmosphere.
b) T₅₀CO- and T₅₀C₃H₆-light off values of all catalyst cores were determined on a synthetic gas bench with the gas mixture given in Table 1. Before testing catalysts were preconditioned under lean conditions with the gas mixture given in Table 1 at 600°C for 30 minutes.
The complete experimentation is shown in Figure 2.

**Table 1**

| | Lean conditioning | Determination of light-off |
|---|---|---|
| GHSV [1/h] | 60000 | 60000 |
| NO [ppm] | 500 | 250 |
| NO₂ [ppm] | 0 | 0 |
| O₂ [vol%] | 12.5 | 12.5 |
| CO [ppm] | 0 | 1000 |
| HC [ppm C3] (C₃H₆) | 0 | 300 (300) |
| CO₂ [vol%] | 6 | 6 |
| H₂O [vol%] | 6.5 | 6.5 |
| N₂ | rest | rest |

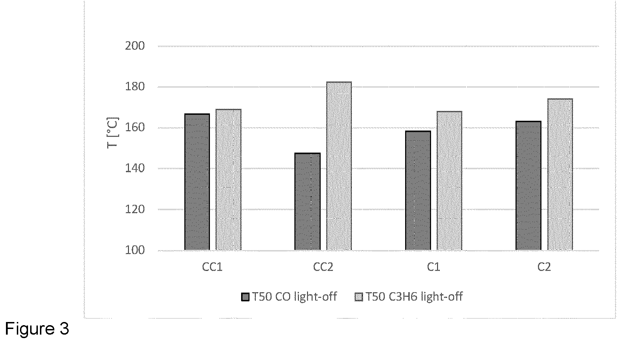

c) The results obtained are given in Figure 3.

### Example 4

Comparative experiments to determine heat-up
a) Cores were taken out of catalysts C1, C2 and CC1. All cores were aged 16 h at 800°C under hydrothermal atmosphere.
b) All cores were heated up on a synthetic gas bench with the gas mixture given in Table 2 with 30K/min. Before testing catalysts were preconditioned with the same gas mixture at 650°C for 30 minutes. The temperatures at the catalyst inlet and outlet were determined.

**Table 1**

| | |
|---|---|
| GHSV [1/h] | 60000 |
| NO [ppm] | 500 |
| O₂ [vol%] | 10.5 |
| CO [ppm] | 800 |
| HC [ppm C3] (C₃H₆) | 130 |
| CO₂ [vol%] | 6.3 |
| H₂O [vol%] | 7 |
| N₂ | rest |

All catalysts behaved identically. While the temperature at the catalyst inlet increased with the temperature ramp of 30K/min, the temperature at the catalyst outlet was less than that at the inlet and reached 200°C after 600 seconds. No exotherm could be determined.
c) Additional cores were taken out of catalysts C1, C2 and CC1 and aged 16 h at 800°C under hydrothermal atmosphere according to step a) above. Before testing the cores were preconditioned with the gas mixture given in table 3 at 450°C for 30 minutes. Finally, the cores were heated up on a synthetic gas bench with the gas mixture given in Table 4 with 30K/min with average λ = 0.998 at a frequency of 1 Hz and an amplitude +0.038 / - 0.034. The temperatures at the catalyst inlet and outlet were determined.

**Table 3**

| | |
|---|---|
| GHSV [1/h] | 60000 |
| NO [ppm] | 1000 |
| O₂ [vol%] | 1.15 |
| CO [ppm] | 1.5 |
| HC [ppm C3] (C₃H₆/C₃H₈) | 333/167 |
| CO₂ [vol%] | 14 |
| H₂O [vol%] | 10 |
| N₂ | rest |

**Table 4**

| | |
|---|---|
| GHSV [1/h] | 60000 |
| NO [ppm] | 1000 |
| O₂ stat [vol%] | 0.825 |
| O₂ dyn [vol%] | 0.325 |
| H₂ stat [vol%] | 0.28 |
| H₂ dyn [vol%] | 0.22 |
| CO [ppm] | 1.5 |
| HC [ppm C3] (C₃H₆/C₃H₈) | 333/167 |
| CO₂ [vol%] | 14 |
| H₂O [vol%] | 10 |
| N₂ | rest |

While CC1 behaved identically to the test described under b) above, the temperature at the outlet of C1 and C2 increased rapidly and reached 200°C after 205 and 210 seconds, respectively. After 250 seconds the outlet temperature of C1 and C2 was more than 100°C higher compared to CC1.

### Example 5

The coated substrate obtained according to Example 1 above was coated over 50% of its length with 77 g/l of a washcoat containing platinum and palladium in a weight ratio of 12:1 fixed on an alumina-silica-mixed oxide. The oxidation catalyst obtained corresponds to the eleventh arrangement mentioned above

### Example 6

The coated substrate obtained according to Example 2 above was coated over 50% of its length with 77 g/l of a washcoat containing platinum and palladium in a weight ratio of 12:1 fixed on an alumina-silica-mixed oxide. The oxidation catalyst obtained corresponds to the tehth arrangement mentioned above

## Claims

1. Diesel oxidation catalyst comprising a carrier body having a length L extending between a first end face and a second end face, and
differently composed material zones A and B arranged on the carrier body, wherein
- material zone A comprises platinum, palladium, rhodium or a mixture of any two or more thereof applied to a cerium-zirconium mixed oxide, and
- material zone B comprises platinum, palladium or platinum and palladium applied to a carrier oxide B.

2. Diesel oxidation catalyst according to claim 1, **characterized in that** material zone A comprises platinum and palladium in a weight ratio of 3:1 to 1:50.

3. Diesel oxidation catalyst according to claim 1 and/or 2, **characterized in that** the cerium-zirconium mixed oxide comprises 40 to 90% by weight of cerium oxide and 60 to 10% by weight of zirconium oxide.

4. Diesel oxidation catalyst according to one or more of claims 1 to 3, **characterized in that** material zone B comprises platinum and palladium in a weight ratio of 10:1 to 1:3

5. Diesel oxidation catalyst according to one or more of claims 1 to 4, **characterized in that** carrier oxide B is selected from the group consisting of aluminum oxide, doped aluminum oxide, silicon oxide, titanium dioxide, zirconium oxide and mixed oxides of one or more thereof.

6. Diesel oxidation catalyst according to one or more of claims 1 to 5, **characterized in that** material zone B comprises lanthanum oxide, magnesium oxide, barium oxide and/or strontium oxide.

7. Diesel oxidation catalyst according to one or more of claims 1 to 6, **characterized in that** material zone B comprises a hydrocarbon adsorbent material.

8. Diesel oxidation catalyst according to one or more of claims 1 to 7, **characterized in that** the carrier body comprises a material zone C, which is different from material zones A and B and which comprises platinum, palladium or platinum and palladium applied to a carrier oxide C.

9. Diesel oxidation catalyst according to claim 8, **characterized in that** material zone C comprises platinum or platinum and palladium in a weight ratio ≥ 1.

10. Diesel oxidation catalyst according to claim 8 and/or 9, **characterized in that** carrier oxide C is in particular selected from the group consisting of aluminum oxide, doped aluminum oxide, silicon oxide, zirconium oxide, titanium dioxide and mixed oxides of one or more thereof.

11. Diesel oxidation catalyst according to one or more of claims 1 to 10, **characterized in that** it comprises a carrier body having a length L extending between a first end face and a second end face, and
differently composed material zones A, B and C arranged on the carrier body, wherein
- material zone A comprises platinum and palladium in a weight ratio of 1:1 to 1:10 applied to a cerium-zirconium mixed oxide comprising 40 to 90% by weight of cerium oxide and 60 to 10% by weight of zirconium oxide,
- material zone B comprises platinum and palladium in a weight ratio of 5:1 to 1:1 applied to aluminum oxide or lanthanum-stabilized aluminum oxide, and
- material zone C comprising platinum and/or palladium applied to aluminum oxide doped with 1 to 20% by weight of silica based on the doped aluminum oxide.

12. Diesel oxidation catalyst according to one or more of claims 1 to 8, **characterized in that** material zones A and B both extend over the complete length L of the carrier body and material zone A is located below material zone B.

13. Method for treating diesel exhaust gases, **characterized in that** the diesel exhaust gas is conducted through a diesel oxidation catalyst according to one or more of claims 1 to 12, wherein the diesel exhaust gas flows into the carrier body at the first end face and flows out of the carrier body at the second end face.

14. Method according to claim 13, **characterized in that** the diesel oxidation catalyst is
- operated at an air-fuel ratio of λ ≤ 1 when its temperature is below 200°C and
- operated at an air-fuel ratio of λ > 1 when its temperature is at or above 200°C.

15. Use of a diesel oxidation catalyst according to one or more of claims 1 to 12 as cold start catalyst, which heats up to temperatures of 200°C or more within 180 to 220 seconds when operated at an air-fuel ratio of λ ≤ 1.

16. Device for purification of exhaust gases from diesel engines having a diesel oxidation catalyst according to one or more of claims 1 to 12.

17. Device according to claim 15, **characterized in that** the diesel oxidation catalyst according to any one of claims 1 to 12 is arranged upstream of a diesel particulate filter and/or a catalyst for the selective catalytic reduction of nitrogen oxides.
